# EUROPEAN PATENT SPECIFICATION

(11) **EP 1 385 148 B1**
(45) Date of publication and mention of the grant of the patent: **18.11.2009**
(21) Application number: 02405655.8
(22) Date of filing: 27.07.2002
(51) Int. Cl.: G10L 15/22

(54) **Method for improving the recognition rate of a speech recognition system, and voice server using this method**
Verfahren zur Steigerung der Erkennungsrate von einem Spracherkennungssystem und Sprachserver zur Anwendung des Verfahrens
Procédé pour augmenter le taux de reconnaissance d'un système de reconnaissance vocale et serveur vocal mettant en oeuvre ce procédé

(43) Date of publication of application: 28.01.2004
(73) Proprietor: Swisscom AG, 3050 Bern (CH)
(72) Inventor: Van Kommer, Robert, 1752 Villars-sur-Glâne (CH)
(74) Representative: P&TS Patents & Technology Surveys SA

(56) References cited:
- WO-A-01/39176
- US-B1- 6 336 091

## Description

### Technical Field

The present invention concerns a method for improving the recognition rate of a speech recognition system, and a voice server using this method.

### State of the art

Many speech recognition systems have potentially very good recognition rates but show only a disappointing lack of robustness. In good conditions, in particular in labor conditions, they are very effective; as soon as the conditions become less than ideal, the error rate increases very fast.

Many different factors can deteriorate the recognition rate. One of the most problematic factors however is the speaker himself. Speakers have a wide variety of accents and dialects; some of them speak too loud, other too low or too far away from the microphone. Speakers call from noisy places such as cars or restaurants; many use poor quality telephone handsets. More and more speakers use mobile phones or voice over IP communication channels that introduce new kinds of distortions, noises, delays and/or deterioration of the quality of the acoustic signal.

The error rate of most speech recognition methods increases dramatically when those kinds of error conditions occur. Some speech recognition systems evaluate the confidence level of the recognition and simply stop the conversion when this level falls below a predetermined threshold. Depending on the type and seriousness of the error condition, the speech recognition system will often continue to function, but with an increase of the error rate. Often, users feel disappointed by the bad quality of the system and fail to understand the reasons for the poor performances. There is no way for users of current systems to notice that the system, for example, has not been trained for detection of a particular dialect or that the speaker speaks to low.

WO-A2-01/39176 relates to a method for voice recognition. According to said method, at least one voice parameter is analysed during the voice recognition process. If said voice parameter exceeds a threshold (S), a message (OUT) is issued to the user, which is specifically designed to request observance of the value range that has been predetermined for the voice parameter. Said message prompts the user to re-input the command with a correction which has been adjusted to the voice parameter.

### Summary of the invention

One aim of the invention is therefore to improve the recognition rate of the speech recognition systems, especially when similar error conditions occur.

Another aim is to improve the recognition rate without changing the speech recognition system itself.

Another aim is to find a method for improving the recognition rate that is especially adapted to systems with which dialogue sessions are performed.

In accordance with one embodiment of the present invention, those aims are reached with a method according to the preamble of the claim 1 characterized in that one of said error conditions is the use of a dialect not supported by the speech recognition system.

In accordance with another embodiment of the present invention those aims are reached with a voice server according to the preamble of claim 16 characterized in that it includes a direct detection module for detecting use of unsupported dialects.

The invention is based notably on the discovery that many error conditions that dramatically increase the error rate of the recognition system arise on the speaker's side and may easily be corrected by the user himself. However, in most cases, the speaker is not aware of the reasons for the poor performances. On the other side, many reasons for the degradation of the recognition rate can be detected, but not corrected, by the speech recognition system.

Therefore, the invention suggests that the speech recognition system continuously monitors error conditions and prompts the speaker or even barges in on him to correct the detected errors. This method allows to improve very efficiently the recognition rate of the system.

The method of the invention is according to the present invention used for detecting use of an unsupported dialect and prompting the remote speaker to use another language.

Dynamic language detection systems have already been suggested for automatically detecting the language a user is currently speaking. They are used for selecting the neuronal network or the Hidden Markov Model (HMM) to be used for analyzing the voice of a speaker. However, the systems known in the prior art cannot detect languages they cannot understand or at least convert to text. Furthermore, they are only adapted for distinguishing between completely different languages, for example between French and English for multilingual markets such as Canada, but not between different dialects of a same language.

### Brief description of the drawings

The invention will be better understood with the help of the description of a specific embodiment illustrated by the figures in which:
- Fig. 1: shows a diagram of a first embodiment of a telecommunication system according to the invention and
- Fig. 2: is a flowchart of the method of the invention.

### Detailed description of the invention

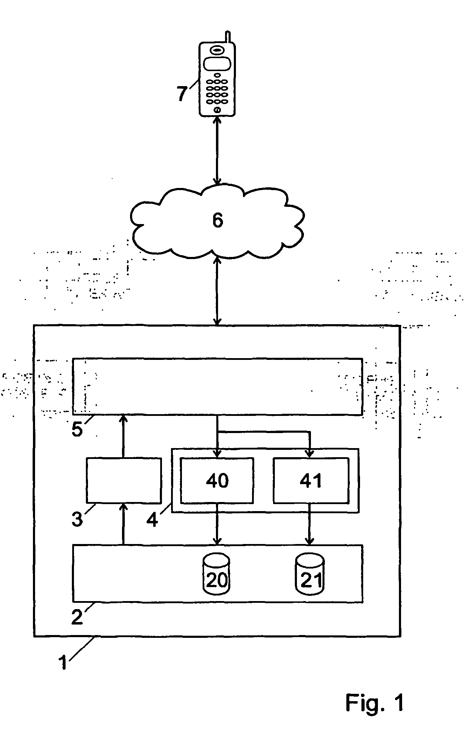

Fig. 1 shows a diagram of a telecommunication system according to the invention. It includes a speech server 1 operated by a service provider, for example by a mobile network operator, by an internet service provider or by a software solution provider and serving preferably a plurality of users (or subscribers), for example remote users using handsets 7. Users establish a voice connection with the speech server over a network 6, for example a public switched network or a packet-based network, for example a TCP-IP network over which a Voice over IP speech connection can be established.

The speech server 1 includes a user interface 5 for answering the connection request from the remote users, identifying the users and verifying the access rights. The user interface 5 can include for example a CLI (Caller Line Identification) module, a user-id and password verification module, a remote smart card interrogation module and/or a biometric identification module.

A speech recognition module 4 is provided in the speech server 1. The module 4 includes a speech analysis module 40 and, according to the invention, an error detection system 41 that will be described later.

The speech analysis module 40 preferably comprises a software application executed by a microprocessor system (not shown) of the server 1 for analysing words and/or sentences spoken by the remote users and for converting them into commands and/or text input. It preferably uses Hidden Markov Models (HMMs), neuronal networks or hybrid recognition systems. In a preferred embodiment, the speech recognition module comprises Hidden Markov Models built with a toolkit such as the HTK toolkit. The module 40 preferably uses adaptative speech models and adaptative language models. Speaker-dependent recognition methods are preferably used; however, the invention can also be: used with speaker-independent speech recognition methods if the speaker is not identified or if speaker-dependent speech models are not available: Speaker-dependent speech models usually allow for a faster and more reliable speech recognition than speaker-independent speech models, but can obviously only be used after speaker identification.

The server 1 further includes a dialogue manager 2 for establishing a spoken dialogue with the user of the handset 7. The dialogue manager 2 preferably comprises software and/or components parts for answering commands or requests uttered by the user with the requested information or service. In an embodiment, the requested information is retrieved from a content database 21. The content database may include a set of XML and/or VoiceXML pages. User profiles 20 may be stored for delivering personalized information to each user; in this case, the answers of the dialogue manager may depend on the profile (sex, age, interests, professional activity, etc.) of the speaker and/or on his history of dialogues with the speech server 1. The dialogue manager can also cooperate with an application run by the server 1 or by an external server for delivering the requested information to the speaker.

Answers of the dialogue manager are converted into speech by a speech synthesis module 3 and delivered to the handset 7 of the remote speaker over the user interface 5 and the network 6.

According to the invention, the speech recognition system 4 includes an error detection system 41 for detecting error conditions caused by the speaker and which can be corrected by the speaker. The error detection system 41 detects the error condition and suggests a correction to the speaker as soon as possible, if needed by interrupting the speaker.

The error detection system 41 preferably includes a dialect detection system for detecting when speakers are using a dialect not supported by the speech recognition system 4. For the particular case of Swiss languages, the system will detect when a teleservice user answers to the automated speech server 1 by speaking "Mundart Deutsch". In fact, in the German part of Switzerland, this may often arise even if the speech synthesis system is speaking to him in "Hoch Deutsch".

The language-dialect detection algorithm can be based for example on a phonotactic approach. This method is appropriate for detecting the language of an unknown text. It is based on a number of acoustic clusters learned from unlabelled speech data in the different languages one wants to distinguish. In an embodiment, a set of phonemes representative of each language or dialect one wants to distinguish is built and the dialect detection system detects, with a probability level, which dialect is closest to the audio data received from the remote speaker.

In another embodiment, if at least some words in the answers of the speaker are known, the language identification is easier and can be based on whole word or phoneme modelling of speech of both languages. Word models and/or phoneme models for the dialect may be refined through the adaptation with the word or phoneme examples spoken by the remote speaker. This method can be called supervised acoustic clustering.

The dialect detection system may use the same neuronal network or HMMs as the one used by the speech analysis module 40 for the speech recognition, or another smaller neuronal network or HMM specialized for the dialect detection function.

According to the invention, the error detection system 41 can even detect and recognise dialects which are not, or not reliably, converted by the language recognition system. This feature exploits the fact that identification of a specific dialect can be performed with a much smaller network, and with much less training, or with a simpler system than what would be needed for a speech recognition system to reliably understand this dialect. For example, simple Gaussian mixture models may prove sufficient for dialect detection whereas a more complex HMM or neuronal network would be needed to recognize this dialect and convert it to text. Even if a HMM or neural network system is used for the dialect detection, its size and complexity, and the time needed for its training, is much less than what would be needed for a recognition system.

In addition to unsupported dialect detection, the error detection system 41 can detect different other error conditions which can be corrected by the remote speaker. Some error conditions can be detected with simple measurements, for example by measuring the signal-to-noise ratio. However, in a preferred embodiment, error conditions are detected with a pattern matching mechanism, preferably using neural networks or support vector machines (SVM) trained on a set of typical correctable bad acoustic conditions that are encountered. This audio material is collected and annotated in order to train the pattern matching mechanism and to generate a different error message depending on the error condition. In another embodiment, a test signal can be sent over the line for determining parameters of the transmission channel.

Typical error conditions that are detected in a preferred embodiment include:
1. Echo detection.
2. Background noise detection (environment noise, for example in a car, ...)
3. Additive and/or convolution distortion caused by a poor quality handset.
4. Acoustic signal too low; bad signal to noise ratio.
5. Bad transmission detection (crosstalk, communication channel errors, mobile communication channel problems, including fade-outs, drop-outs, etc).
6. Network congestion (for Voice over IP communications).
7. Packet lost (for packet-based communications).
8. Children detection if the system has not been trained with children's' voices.

The error detection system may use signals or information delivered by various parts of the speech server 1. Actually, a bad quality of transmission may be detected on the transmission layer of the channel by a high error rate as measured by a CRC (Cyclic Redundancy Check) detector. Use of a German dialect is more likely if the speaker is calling from the German part of Switzerland than from any other geographical region as indicated by the caller line indication. This information from various components of the server 1 is preferably transmitted to the error detection system 21 for helping it to perform a faster and more reliable error detection.

The error detection system 41 delivers a different error condition to the dialogue manager 2 depending on the error condition detected. In an embodiment, the error condition may include a value indicative of the "seriousness" of the error. The dialogue manager reacts by delivering an error message spoken by the speech synthesis module 3 to the speaker. In a preferred embodiment, the dialogue manager immediately interrupts any dialogue with the speaker and barges in on him to deliver the error message.

If possible, the error message depends on the type and seriousness of the error, and includes a suggestion for remedying the error. For example, if a bad signal to noise ratio is detected, the dialogue manager will suggest speaking louder and moving the microphone closer to his mouth. If environment noise is measured, the dialogue manager 2 will suggest to the speaker to quieten his environment, to protect the microphone with the hand or to move to a calmer place. If an immediate correction is not obvious, the dialogue manager can at least inform the speaker of the reason for the poor recognition rate and suggest an improvement for future sessions; for example, use a better handset or a faster Internet connection.

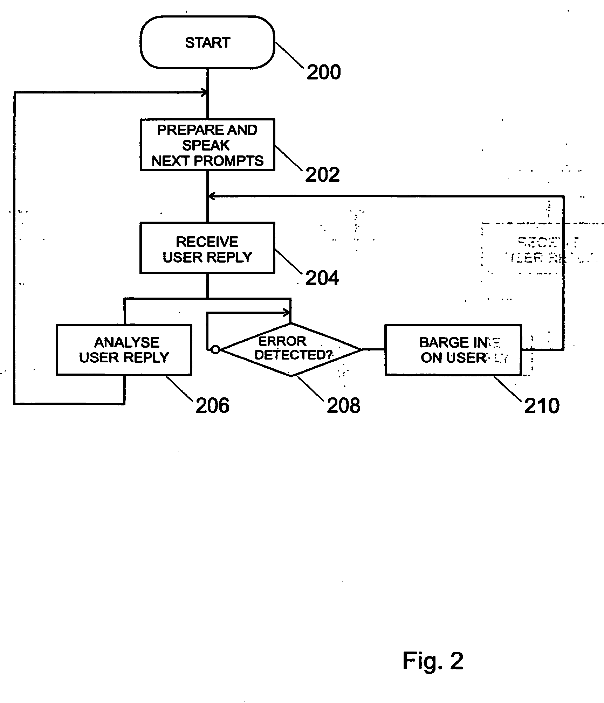

Figure 2 is a flowchart illustrating a preferred embodiment of the main steps of the method according to the invention. The process starts with step 200 during which a remote speaker establishes a voice connection over the network 6 with the speech server 1. Step 200 preferably includes a speaker identification and/or authentication, verification of the speaker's rights to access the system, and so on.

During step 202, the dialogue manager prepares a message, a question or a prompt that is spoken by the speech synthesiser 3 to the calling speaker 7. The message spoken depends on previous interactions, on the state of the dialogue manager, on the content database 21 and/or on the user profile 20.

An answer from the calling speaker is received during step 204. This answer preferably includes spoken words, numbers or sentences, but may also include DTMF (dual tone multi frequency) signals dialled by the speaker on the keypad of his handset 7.

The subsequent steps 206 and 208 preferably occur simultaneously. During step 206, the speech analysis module 40 converts each word, number, sentence, command or DTMF code received from the remote speaker into commands or queries sent to the dialogue manager 2. A confidence level is preferably sent along with the decoded message. When the message sent by the remote speaker during an iteration of the dialogue session has been completely decoded by the analysis module 40, the system returns to step 202 where the dialogue manager 2 prepares the next message to be spoken to the calling speaker. This message can include a reply to a speaker's query.

Concurrently with step 206, the error detection module 41 continuously verifies during step 208 if predetermined error conditions are met in the speech data received from the remote speaker. This verification is preferably performed while the remote speaker speaks, without waiting until he is finished.

If one error condition is detected during step 208, the error detection module 41 sends an error signal to the dialogue manager 2, which immediately barges in on the remote speaker with a prompt inviting him to remedy the error (step 210). The error detection module preferably continuously measures an error level or the recognition confidence level for determining whether an error has been made. The dialogue manager only invites a correction when the error confidence rate is higher than a predetermined threshold level.

The system returns then to step 204 during which a new, corrected reply from the remote speaker is expected.

The following example illustrates a possible German dialogue between a speaker and a speech recognition system being part of an authentication system. The speaker is invited to state his name and to pronounce a sequence of digits:

| **The speech server 1** | **The remote speaker using the handset 7** |
|---|---|
| | The speaker calls the speech server with his handset |
| *Royal Bank System, bitte sagen Sie Ihren Namen.* | |
| | *Hans Schm..* |
| Error Condition detected: Signal to Noise ratio too low: | |
| *Bitte sprechen Sie lauter und näher zum Mikrophon* | |
| | *HANS SCHMIDT* |
| *Bitte sagen Sie Ihren PIN Code* | |
| | *Eis füf drü..* |
| Error Condition detected: Use of dialect *Bitte sprechen Sie hoch Deutsch!* | |
| | *Eins fünf drei Sieben* |
| *Danke, Sie durfen jetzt auf folgende Bankkonten zugreifen:* ... | |

### Reference numbers

- 1: Speech server
- 2: Dialogue manager
- 20: User profile
- 21: Content database
- 3: Speech synthesis module
- 4: Speech recognition module
- 40: Speech analysis module
- 41: Error detection module
- 5: User interface
- 6: Network
- 7: Handset

- 200, 202, 204, 208, 210: Steps of the method

## Claims

1. Method for improving the recognition rate of a speech recognition system (4) during a dialogue session with a speaker, comprising the following steps:
said speech recognition system (4) detects at least one predetermined error condition that may cause a deterioration of said recognition rate (208),
said dialogue session is modified when said error condition is detected (210),
**characterized in that** one of said error conditions is the use of a dialect not supported by the speech recognition system (4).

2. The method of claim 1, **characterized in that** said speaker is prompted to correct the error when said error condition is detected (210).

3. The method of one of the claims 1 or 2, **characterized in that** said speech recognition system (4) verifies said error condition continuously during said dialogue session.

4. The method of one of the claims 2 to 3, **characterized in that** said speech recognition system (4) verifies a plurality of different predetermined error conditions,
and wherein said speech recognition system (4) uses a different message to prompt said speaker to correct said error depending on said detected error condition.

5. The method of one of the claims 1 to 4, **characterized in that** said speech recognition system (4) barges in on said speaker immediately when said error condition is detected.

6. The method of one of the claims 1 to 5, **characterized in that** said dialect is detected with a phonotactic approach.

7. The method of claim 6, **characterized in that** said dialect detection uses a whole word modeling of speech of said dialect and of the expected language.

8. The method of claim 6, **characterized in that** said dialect detection uses a phoneme modeling of speech of said dialect and of the expected language.

9. The method of one of claims 1 to 8, **characterized in that** the identification of a dialect is performed with an adaptative system.

10. The method of one of the claims 1 to 9, **characterized in that** one of said error conditions is the detection of background noise.

11. The method of one of the claims 1 to 10, **characterized in that** one of said error conditions is the detection of additive or convolutive distortion caused by a low quality handset (7).

12. The method of one of the claims 1 to 11, **characterized in that** one of said error conditions is the detection of a bad signal to noise ratio caused by a low acoustic signal.

13. The method of one of the claims 1 to 12, **characterized in that** one of said error conditions is the detection of network congestions or packet loss in Voice over IP channels.

14. The method of one of the claims 1 to 13, **characterized in that** one of said error conditions is the detection of drop-outs in a mobile communication channel.

15. The method of one of the claims 1 to 14, **characterized in that** one of said error conditions is the detection of children's voices for a speech recognition system (4) that has not been trained with children's speech.

16. A voice server (1) comprising:
a speech recognition system (4) for analyzing text spoken by a speaker using a network,
a speech synthesis module (3) for generating spoken answers,
an error detection system (41) for verifying at least one predetermined error condition that may cause a deterioration of the recognition rate of said speech recognition system (4),
wherein the answers spoken by said speech synthesis module (3) depend on the output of said error detection system (41), **characterized in that** said error detection system (41) includes a dialect detection module for detecting use of unsupported dialects.

17. The voice server of claim 16, **characterized in that** said dialect detection module includes a smaller network than the one used for the speech recognition.

18. The voice server of claim 17, **characterized in** comprising an interface (5) for connecting it to a remote telecommunication network (6).

## Patentansprüche

1. Verfahren, um die Erkennungsrate eines Spracherkennungssystem (4) während einer Dialogsitzung mit einem Sprecher zu erhöhen, umfassend die folgenden Schritte:
Besagtes Spracherkennungssystem (4) detektiert mindestens eine Fehlerbedingung, welche eine Schädigung der besagten Erkennungsrate (208) verursachen kann,
besagte Dialogsitzung wird verändert, wenn besagte Fehlerbedingung detektiert wird (210),
**dadurch gekennzeichnet, dass** eine der besagten Fehlerbedingungen der Gebrauch von einem Dialekt ist, der nicht durch das Spracherkennungssystem (4) unterstützt ist.

2. Das Verfahren gemäss Anspruch 1, **dadurch gekennzeichnet, dass** besagter Sprecher eine Ansage erhält, den Fehler zu korrigieren, wenn besagte Fehlerbedingung detektiert wird (210).

3. Das Verfahren gemäss einem der Ansprüche 1 oder 2, **dadurch gekennzeichnet, dass** besagtes Spracherkennungssystem (4) besagte Fehlerbedingung kontinuierlich während besagter Dialogsitzung überprüft.

4. Das Verfahren gemäss einem der Ansprüche 2 bis 3, **dadurch gekennzeichnet, dass** besagtes Spracherkennungssystem (4) eine Vielzahl von verschiedenen vorbestimmten Fehlerbedingungen überprüft,
und in welchem besagtes Spracherkennungssystem (4) eine verschiedene Meldung verwendet, um die Ansage an besagten Sprecher zu machen, um besagten Fehler in Abhängigkeit von besagter erkannter Fehlerbedingung zu korrigieren.

5. Das Verfahren gemäss einem der Ansprüche 1 bis 4, **dadurch gekennzeichnet, dass** besagtes Spracherkennungssystem (4) besagten Sprecher unmittelbar unterbricht, wenn besagte Fehlerbedingung detektiert wird.

6. Das Verfahren gemäss einem der Ansprüche 1 bis 5, **dadurch gekennzeichnet, dass** besagter Dialekt mit einer phonotaktischen Ansatz detektiert wird.

7. Das Verfahren gemäss Anspruch 6, **dadurch gekennzeichnet, dass** besagte Dialektdetektion ein Ganzwortmodell der Sprache des besagten Dialekts und der erwarteten Sprache verwendet.

8. Das Verfahren gemäss Anspruch 6, **dadurch gekennzeichnet, dass** besagte Dialektdetektion ein phonetisches Modell der Sprache des besagten Dialekts und der erwarteten Sprache verwendet.

9. Das Verfahren gemäss einem der Ansprüche 1 bis 8, **dadurch gekennzeichnet, dass** die Identifikation eines Dialekts mit einem anpassbaren System durchgeführt wird.

10. Das Verfahren gemäss einem der Ansprüche 1 bis 9, **dadurch gekennzeichnet, dass** eine der besagten Fehlerbedingungen das Detektieren von Hintergrundslärm ist.

11. Das Verfahren gemäss einem der Ansprüche 1 bis 10, **dadurch gekennzeichnet, dass** eine der besagten Fehlerbedingungen das Detektieren von zusätzlicher oder konvolutiver Verzerrung, die durch Hörer (7) geringer Qualität verursacht werden, ist.

12. Das Verfahren gemäss einem der Ansprüche 1 bis 11, **dadurch gekennzeichnet, dass** eine der besagten Fehlerbedingungen das Detektieren von einem schlechten Verhältnis des Signals zum Rauschen ist, das durch ein geringes akustisches Signal verursacht wird.

13. Das Verfahren gemäss einem der Ansprüche 1 bis 12, **dadurch gekennzeichnet, dass** eine der besagten Fehlerbedingungen das Detektieren von Netzwerküberlastungen oder Paketverluste in Sprache über IP-Kanäle ist.

14. Das Verfahren gemäss einem der Ansprüche 1 bis 13, **dadurch gekennzeichnet, dass** eine der besagten Fehlerbedingungen das Detektieren von Ausfällen in einem mobilen Kommunikationskanal ist.

15. Das Verfahren gemäss einem der Ansprüche 1 bis 14, **dadurch gekennzeichnet, dass** eine der besagten Fehlerbedingungen das Detektieren von Kinderstimmen ist, mit einem Spracherkennungssystem, welches nicht mit Kinderstimmen trainiert wurde.

16. Ein Sprachserver (1) umfassend:
ein Spracherkennungssystem (4), um Text, der durch einen Sprecher gesprochen wird, unter Verwendung eines Netzwerks zu analysieren,
ein Sprachsynthesemodul (3), um gesprochene Antworten zu generieren,
ein Fehlerdetektionssystem (41), um mindestens eine vordefinierte Fehlerbedingung zu verifizieren, welche eine Schädigung der besagten Erkennungsrate (208) verursachen kann,
wobei die gesprochenen Antworten durch besagtes Sprachsynthesemodul (3) von dem Ausgang des besagten Fehlerdetektionssystem (41) abhängen,
**dadurch gekennzeichnet, dass** besagtes Fehlerdetektionssystem (41) einen Dialektdtektionsmodul enthält, um die Verwendung eines nicht unterstützten Dialekts zu detektieren.

17. Der Sprachserver gemäss Anspruch 16, **gekennzeichnet dadurch, dass** besagtes Dialektdetektionsmodul ein kleineres Netzwerk als das, was für Spracherkennung verwendet wird, enthält.

18. Der Sprachserver gemäss Anspruch 17, **gekennzeichnet dadurch, dass** er ein Interface (5) umfasst, um ihn zu einem entfernten Telekommunikationsnetzwerk (6) zu verbinden.

## Revendications

1. Procédé, pour améliorer le taux de reconnaissance d'un système de reconnaissance vocale (4) pendant un dialogue avec un locuteur, comprenant les étapes suivantes:
ledit système de reconnaissance vocale (4) détecte au moins une condition d'erreur prédéterminée, qui peut causer une dégradation dudit taux de reconnaissance (208),
ledit dialogue est modifié, lorsque ladite condition d'erreur est détectée (210),
**caractérisé en ce qu'**une desdites conditions d'erreur est l'utilisation d'un dialecte non pris en compte par le système de reconnaissance vocale (4).

2. Procédé selon la revendication 1, selon lequel ledit locuteur reçoit une annonce qui l'invite à corriger l'erreur, lorsque ladite condition d'erreur est détectée.

3. Procédé selon l'une des revendications 1 à 2, selon lequel ledit système de reconnaissance vocale (4) vérifie ladite condition d'erreur continuellement pendant ledit dialogue.

4. Procédé selon l'une des revendications 2 à 3, selon lequel ledit système de reconnaissance vocale (4) vérifie un grand nombre de conditions d'erreur différentes prédéterminées,
et dans ledit système de reconnaissance vocale (4) utilise un message différent pour faire ladite annonce audit locuteur, pour corriger ladite erreur en rapport avec ladite condition d'erreur identifiée.

5. Procédé selon l'une des revendications 1 à 4, selon lequel ledit système de reconnaissance vocale (4) interrompt immédiatement ledit locuteur lorsque ladite condition d'erreur est détectée.

6. Procédé selon l'une des revendications 1 à 5, selon lequel ledit dialecte est détecté par une approche systématique d'étude phonologique.

7. Procédé selon la revendication 6, selon lequel ladite détection dudit dialecte utilise une modélisation de mots entiers des paroles dudit dialecte et de la langue prise en compte.

8. Procédé selon la revendication 6, selon lequel ladite détection dudit dialecte utilise une modélisation phonétique des paroles dudit dialecte et de la langue prise en compte.

9. Procédé selon l'une des revendications 1 bis 8, selon lequel l'identification d'un dialecte s'effectue au moyen d'un système auto-adaptatif.

10. Procédé selon l'une des revendications 1 à 9, selon lequel une desdites conditions d'erreur est la détection de bruit ambiant.

11. Procédé selon l'une des revendications 1 à 10, selon lequel une desdites conditions d'erreur est la détection de distorsion additive ou convolutive générée par un combiné (7) de mauvaise qualité.

12. Procédé selon l'une des revendications 1 à 11, selon lequel une desdites conditions d'erreur est la détection d'un mauvais rapport signal sur bruit généré par un signal acoustique faible.

13. Procédé selon l'une des revendications 1 à 12, selon lequel une desdites conditions d'erreur est la détection de l'encombrement du réseau ou de la perte de paquets de données dans la transmission de voix par canal-IP.

14. Procédé selon l'une des revendications 1 à 13, selon lequel une desdites conditions d'erreur est la détection de pannes dans un canal de communication téléphonique mobile.

15. Procédé selon l'une des revendications 1 à 14, selon lequel une desdites conditions d'erreur est la détection de voix d'enfants, par un système de reconnaissance vocale qui n'a pas été exercé avec des voix d'enfants.

16. Un serveur vocal (1) comprenant:
un système de reconnaissance vocale (4) pour analyser le texte prononcé par un locuteur utilisant un réseau,
un module de synthèse vocale (3) pour générer des réponses parlées,
un système de détection d'erreur (41), pour vérifier au moins une condition d'erreur prédéfinie, laquelle peut causer une dégradation dudit taux de reconnaissance (208),
selon lequel les réponses parlées par ledit module de synthèse vocale (3) dépendent du résultat dudit système de détection d'erreur (41),
**caractérisé par le fait que** ledit système de détection d'erreur (41) inclut un module de détection de dialecte pour détecter l'utilisation de dialectes non pris en compte par le système.

17. Le serveur vocal selon la revendication 16, **caractérisé en ce que** ledit module de détection de dialecte inclut un réseau plus restreint que celui utilisé pour la reconnaissance vocale.

18. Le serveur vocal selon la revendication 17, **caractérisé en ce qu'**il comprend un interface (5) pour le relier à un réseau de télécommunication à distance (6).
